(19) Europäisches Patentamt

European Patent Office

Office européen des brevets

(11) Publication number: **0 206 026**
**B1**

(12) **EUROPEAN PATENT SPECIFICATION**

(45) Date of publication of patent specification: **12.10.88**

(21) Application number: **86107603.2**

(22) Date of filing: **04.06.86**

(51) Int. Cl.⁴: **F 16 D 3/41, B 21 B 35/14**

(54) **Split yoke universal joint.**

(30) Priority: **13.06.85 US 744227**

(43) Date of publication of application:
**30.12.86 Bulletin 86/52**

(45) Publication of the grant of the patent:
**12.10.88 Bulletin 88/41**

(84) Designated Contracting States:
**AT BE CH DE FR GB IT LI LU NL SE**

(56) References cited:
**DE-A-3 314 322**
**DE-C- 624 185**
**FR-A-1 571 474**
**FR-A-2 165 014**
**FR-A-2 190 210**
**FR-A-2 487 933**
**GB-A- 709 298**
**GB-A-1 552 272**
**US-A-2 698 527**
**US-A-3 204 428**

(73) Proprietor: **MORGAN CONSTRUCTION COMPANY**
**15 Belmont Street**
**Worcester Massachusetts 01605 (US)**

(72) Inventor: **Koelling, Robert K., Sr.**
**9430 Shore View**
**Dallas, Texas 75238 (US)**

(74) Representative: **Patentanwälte Grünecker, Kinkeldey, Stockmair & Partner**
**Maximilianstrasse 58**
**D-8000 München 22 (DE)**

Courier Press, Leamington Spa, England.

# Description

This invention relates to a high torque universal joint for providing a drive connection between the flanged ends of two rotatable elements, said joint comprising a cross formed by two mutually perpendicular pairs of coaxially aligned trunnions, a pair of yokes, each yoke being sub-divided into separate mating half sections, each half section including a base portion with an integral forwardly protruding bearing cap having a bore formed therein, bearings contained in said bores, the mating half sections of each yoke being adapted for assembly onto a pair of said trunnions, with each trunnion being journalled for rotation in one of said bearings, and with the base portions of the thus assembled mating half sections having parallel juxtaposed surfaces, the juxtaposed surfaces of each yoke being located on opposite sides of a first yoke reference plane passing through the center of the joint, the first yoke reference planes being mutually perpendicular, means for detachably mounting the thus assembled mating half sections to a respective one of said flanged ends, said mating half sections and said flanged ends having mutually abutting surfaces, the abutting surfaces of each yoke lying on a second yoke reference plane perpendicular to the first yoke reference plane, and interengagement means extending across said second yoke reference planes for mechanically coupling the thus assembled, and mounted mating half sections to their respective flanged ends.

Univeral joints of the afore-cited type are Hook's or Cardan type universal joints of the type employed in high torque applications such as those typically encountered in rolling mills. As herein employed, the term "high torque" means torques on the order of 0,1 to 0,7 million meter kiloponds (mKp) (1 to 7 million Nm) and higher.

In the conventional Hook's or Cardan type universal joints used in high torque applications, the trunnions of the cross are rotatably supported by bearings retained in the bearing caps of a complementary pair of yokes. The yokes are, in turn, connected to rotatable driving or driven elements. Typically, in a horizontal rolling mill, one yoke is attached to one end of a spindle, and the other yoke is attached either to the output shaft of drive motor, or to one of the work rolls.

In many cases, the yokes are cast as unitary pieces, and through bores are provided in the bearing caps. The unitary yokes are first assembled onto the trunnions, and then the bearings are inserted through the through bores. Finally, the through bores are closed by removable side covers. It has been found, however, that for high torque applications of the type herein under consideration, the structural stiffness of the bearing caps is often unacceptably compromised by the through bores.

In an attempt at overcoming this difficulty, the conventional through bores in the bearing caps have been eliminated in favour of blind bores. By employing blind bores, the structural stiffness of the bearing caps is significantly increased as compared with the prior through bore designs. However, in order to permit yokes with blind bores to be assembled onto the trunnions of the cross, the bearing caps of each yoke must be movable relative to each other for being fitted onto the respective trunnions. In order to achieve this, universal joints have been proposed in which the bearing caps of each yoke are formed as separate lobes which may be individually fastened to a base element forming the base of the yoke. Examples of such universal joints are disclosed in DE—C—624 185, in GB—A—1 552 272, in FR—A—2 165 014 and in US—A—2 698 527. In universal joints of this construction, the precise correlation of the bearing caps relative to each other and their fixation to the base of the respective yoke create severe problems. Such universal joints, therefore, are not suited for use in high torque applications under economical conditions with a satisfactory endurance.

In another way of permitting yokes with blind bores to be assembled onto the trunnions of the cross, the yokes are split into separate mating half sections, each including one of the bearing caps. Unfortunately, the splitting of the yokes create other problems caused by the tendency of the half sections to shift in relation to each other whilst the joint is in service. This relative movement subjects the bearing assemblies to unbalanced loading, causing accelerated wear. Relative movement between the mating half sections can also loosen bolts or studs used to connect the yokes to the flanged ends of the driving or driven elements, thus, causing failure of the joints. In DE—A—33 14 322 a universal joint of the type cited in the beginning is disclosed, in which each yoke is split into two separate mating half sections, each including one of the bearing caps. The bores in said bearing caps are through bores and not blind bores, however, and thus, not providing the increased stiffness obtained by a blind bore construction. The mating halves of each yoke are held together and against the front face at the end of a shaft to which the yoke is attached by means of a sleeve-like clamp, the ends of which bear radial flanges protruding inwardly and forming abutment faces between which a radial circumferential shoulder of the assembled yoke halves and a radial flange at the end of the shaft are held. The shaft has the form of a hollow tube. The torque between the tube-like shaft and the yoke is transmitted by a key placed in grooves arranged diametrically in the shaft wall and in grooves extending in the faces of the bases of the two yoke halves facing the front end of the shaft. The surface of each yoke half facing the front end of the shaft shows a semi-circular axial protrusion which fits into an axial circumferential recess at the end face of the shaft. Due to the construction of the fastening means for connecting the yoke to the end of the shaft and the arrangement of the yoke halves at the end of the shaft, there is a danger of relative movement of the two yoke halves with respect to each other, both in a plane lying in the axis of the shaft and in a plane perpendicular to the axis of the shaft. Thus, in high torque operations, for instance, in roller mill applications, the required precision, reliability and durability is not warranted.

In FR—A—24 87 933 a universal joint is disclosed in which each yoke is formed of two pressed sheet metal parts (each bearing one bearing cap with a through bore) which, after pressing, are combined into an integer yoke by riveting. The portion of the yoke to be connected to a drive shaft is formed as a sleeve clamp to be shifted onto the end of a shaft and tightened therearound. This known universal joint is not of the type cited in the beginning, in that its yokes cannot be attached to the flanged ends of shafts and, due to its design, is not suited for transmitting high torques.

The task underlying the invention is to provide a universal joint of the type cited in the beginning which is simple in its design and in which reliably maintaining bearing alignment between the separate mating half sections is warrented whilst the universal joint is in service, and which allows for transmitting high torques and long endurance, in that loosening of the fastening means used to connect the yokes to the flange ends of the driving and driven elements due to relative movement between yoke half sections is prevented.

In accordance with the invention, this task is solved, in that the bores in the bearing kaps are blind bores, and further by interengagement means extending between the respective parallel juxtaposed surfaces and across said first yoke reference planes for opposing relative movement of the thus assembled mating half sections in their respective first yoke reference planes in directions parallel to their respective second yoke reference planes.

In accordance with the present invention, the mating half sections of each yoke are separably interconnected, and are provided with juxtaposed confronting surfaces lying on opposite sides of a first yoke reference plane passing through the center of the joint. The mating half sections of each yoke abut the flanged ends of the associated driving or driven elements at second yoke reference planes which are perpendicular to the respective first yoke reference planes. First and second key members are located respectively at the first and second yoke reference planes.

In a preferred embodiment to be hereinafter described in more detail, the juxtaposed confronting surfaces at the first yoke reference plane are essentially flat and parallel and are provided with confronting centrally located keyways. The first key members are received in the confronting keyways, and have load carrying side surfaces which are tightly fitted between and which cooperate with adjacent side surfaces of the confronting keyways. The second key members at the second yoke reference planes are preferably although not necessarily formed integrally with and protrude rearwardly from the mating half sections into recesses in the flanged ends of the associated driving or driven element. The restraining forces acting at the first and second yoke reference planes coact during service of the joint to prevent relative movement between the mating yoke half sections, thereby maintaining critical bearing alignment while at the same time preventing loosening of the bolts or studs used to detachably connect the yokes to the driving or driven elements.

The means for separably interconnecting the mating yoke half sections preferably includes one or more tie bolts or other like connecting elements extending through the mating half sections in directions perpendicular to the respective first yoke reference planes.

The juxtaposed surfaces of the mating yoke half sections may additionally include confronting channels on opposite sides of the centrally located keyways. Spacer blocks are received in the confronting channels. The spacer blocks have oppositely facing surfaces which cooperate with the bottoms of the channels to laterally locate the mating yoke half sections with respect to each other on opposite sides of the respective first yoke reference planes.

The invention will now be described in greater detail with reference to the accompanying drawings, wherein:

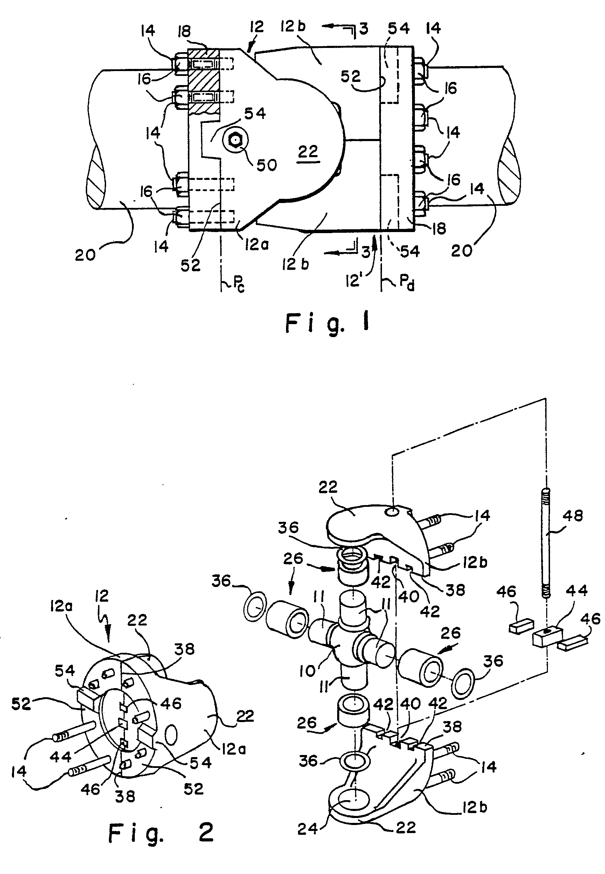

Figure 1 is a side view with portions broken away of a high torque rolling mill universal joint in accordance with the present invention;

Figure 2 is a perspective partially exploded view of the universal joint shown in Figure 1;

Figure 3 is a sectional view taken along line 3—3 of Figure 1;

Figure 4 is a sectional view taken along line 4—4 of Figure 3; and

Figure 5 is an enlarged partial sectional view of one of the bearing caps with a trunnion and bearing assembly received therein.

Referring now to the drawings, a preferred embodiment of a high torque universal joint in accordance with the present invention is shown including a cross 10 formed by two mutually perpendicular pairs of coaxial trunnions 11, with a pair of yokes 12, 12' mounted thereon. The yokes have rearwardly protruding threaded studs indicated typically at 14 which cooperate with nuts 16 to attach the yokes to flanges 18 on rotatable elements 20. As previously indicated, in rolling mill applications, the rotatable elements will typically comprise spindles, work rolls, drive motor output shafts, etc. The yokes 12, 12' are respectively subdivided into mating half sections 12a, 12a and 12b, 12b. Each half section includes a base portion with an integral forwardly protruding bearing cap 22 having an inwardly opening blind bore 24. Bearing assemblies 26 are contained in the blind bores 24. The mating half sections of each yoke 12, 12' are adapted for assembly onto a respective pair of the trunnions 11, with each trunnion being journalled for rotation in a respective one of the bearing assemblies 26.

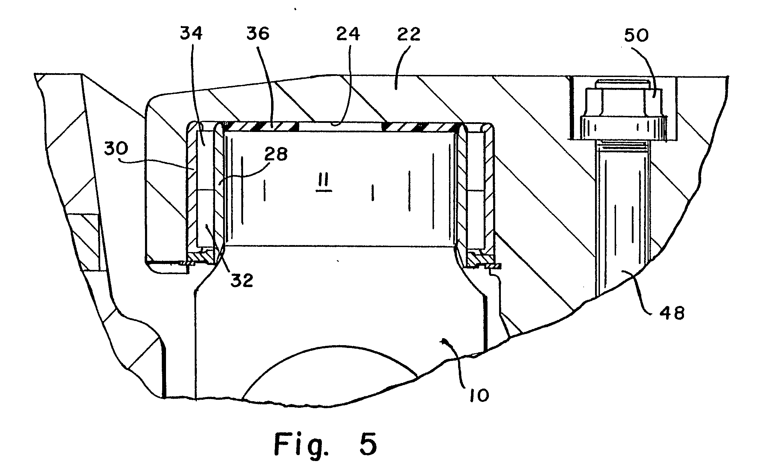

As can be best seen in Figure 5, each bearing assembly 26 preferably includes an inner race 28, an outer race 30, with one or more sets of rollers 32, 34 interposed therebetween. A non-metallic thrust washer 36 is interposed between the end of each trunnion 11 and the bottom of each blind bore 24.

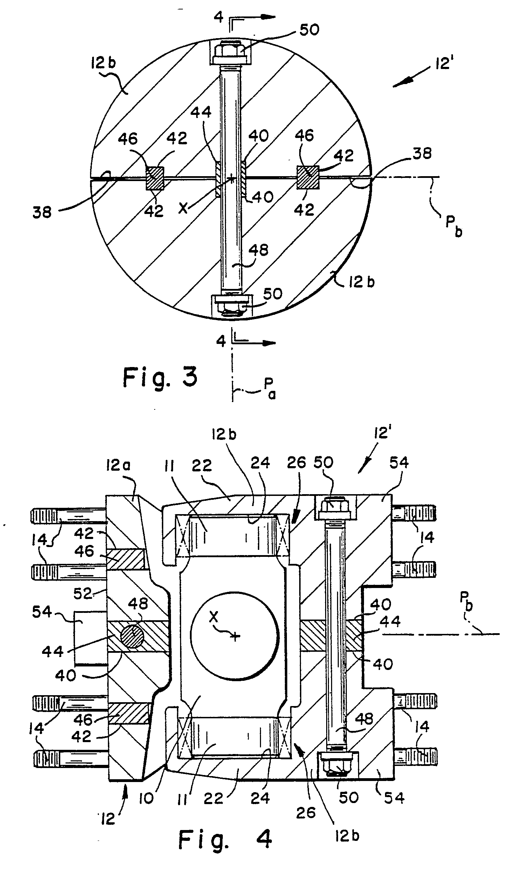

The thus assembled mating half sections 12a, 12a and 12b, 12b have juxtaposed confronting surfaces 38. With reference in particular to Figure 3, it will be seen that the juxtaposed surfaces 38 of mating half sections 12b, 12b lie on opposite sides of a first yoke reference plane $P_b$, whereas the juxtaposed confronting surfaces 38 of mating half sections 12a, 12a lie on opposite sides of another first yoke reference plane $P_a$ which is perpendicular to plane $P_b$. Both first yoke reference planes $P_a$, $P_b$ pass through the universal joint center "x".

The juxtaposed surfaces 38 are machined to provide confronting centrally located keyways 40. Additional confronting channels 42 are located on opposite sides of the keyways 40. First keys 44 extend across the first reference planes $P_a$, $P_b$ and are received in the confronting keyways 40. Spacer blocks 46 also lie on the reference planes $P_a$, $P_b$ and are received in the confronting channels 42.

The first keys 44 have side surfaces which are tightly fitted between and which cooperate with the adjacent side surfaces of their respective keyways 40 to oppose movement of the mating half sections 12a, 12a and 12b, 12b relative to each other in directions parallel to their respective first yoke reference planes $P_a$, $P_b$.

After being assembled onto the trunnions, the mating yoke half sections 12a, 12a and 12b, 12b are preferably separably interconnected by connecting means comnprising tie rods 48 extending therethrough and, in the embodiment herein disclosed, through the first keys 44 in directions perpendicular to the respective first yoke reference planes $P_a$, $P_b$. In other words, the tie rod interconnecting the mating half sections 12a, 12a of yoke 12 is perpendicular to first yoke reference plane $P_a$, and the tie rod interconnecting the mating half sections 12b, 12b of yoke 12' is perpendicular to reference plane $P_b$. Nuts 50 are threaded onto the ends of the tie rods to complete the assembly of each yoke.

While only one tie rod is shown connecting each pair of half sections, it will be understood that multiple tie rods may be employed, and that the single or multiple tie' rods need not necessarily extend through the keys 44.

The spacer blocks 46 have oppositely facing surfaces which cooperate with the bottoms of the channels 42 to laterally locate the mating half sections with respect to each other on opposite sides of their respective first yoke reference planes $P_a$, $P_b$. The spacer blocks insure that the bottoms of the blind bores 24 are located concentrically with respect to the joint center x. The thrust washers 36 provide bearing surfaces for the oscillation movement of the cross and cooperate with the bottoms of the blind bores in locating the cross concentrically with the joint center x.

It will be understood that the spacer blocks 46 are particularly useful when the mating half sections 12a, 12a and 12b, 12b have been formed by cutting a unitary casting into two pieces. However, where the half sections are separately cast, the spacer blocks may be omitted. Also, the keys 44 need not be centrally located, and in some cases, for example when the half sections are separately cast, it may be desirable to substitute a male/female interengagement in place of the removable keys 44.

The thus assembled and interconnected mating yoke half sections 12a, 12a and 12b, 12b are removably mounted on the end flanges 18 of the rotatable elements 20 by a mounting means comprising the previously described studs 14 and nuts 16. When thus mounted, the end surfaces 52 of the yoke half sections abut the flanges 18 of the rotatable elements at second yoke reference planes $P_c$, $P_d$. The reference planes $P_a$, $P_c$ of yoke 12 are mutually perpendicular, as are the reference planes $P_b$, $P_d$ of yoke 12'.

In the embodiment herein disclosed, second keys 54 are formed integrally on each of the yoke half sections. The second keys 54 protrude rearwardly from the yoke end surfaces 52 into recesses in the end flanges 18 to thereby mechanically couple the yokes 12, 12' to the rotatable elements 20.

In certain cases, it might be desirable to form the second keys integrally with the end flanges 18, and to have them protrude into recesses in the yoke half sections. Alternatively, removable keys might be positioned to extend across the second yoke reference planes $P_c$, $P_d$ into confronting recesses in both the yoke half sections and their respective end flanges 18.

The above described arrangement provides a unique and highly effective means of preventing relative movement between the mating half sections of each yoke while the universal joint is in service, which in turn insures that the trunnion bearings 26 remain coaxially aligned and that the nuts 16 on the studs 14 do not loosen. More particularly, there is an important coaction between the first keys 44 located at the first yoke reference planes $P_a$, $P_b$, and the abutting surfaces between the yoke base surfaces 52 and the flanges 18 at the second yoke reference planes $P_c$, $P_d$. The former effectively opposes relative movement of the mating yoke half sections relative to each other in directions parallel to their respective first yoke reference planes $P_a$, $P_b$, whereas the latter opposes relative twisting of the mating yoke half sections across the second yoke reference planes $P_c$, $P_d$. The net result is an axially and radially compact universal joint capable of operating reliably for extended periods of time under high torque conditions.

**Claims**

1. A high torque universal joint for providing a drive connection between the flanged ends of two rotatable elements, said joint comprising:

a cross (10) formed by two mutually perpendicular pairs of coaxially aligned trunnions (11);

a pair of yokes (12, 12'), each yoke being subdivided into separate mating half sections (12a, 12b), each half section including a base portion with an integral forwardly protruding bearing cap bearing a bore formed therein;

bearings (26) contained in said bores, the mating half sections of each yoke being adapted for assembly onto a pair of said trunnions, with each trunnion being journalled for rotation in one of said bearings, and with the base portions of the thus assembled mating half sections having parallel juxtaposed surfaces (38), the juxtaposed surfaces of each yoke being located on opposite sides of a first yoke reference plane ($P_a$, or $P_b$, respectively) passing through the center of the joint, the first yoke reference planes ($P_a$, $P_b$) being mutually perpendicular;

means (14, 16) for detachably mounting the thus assembled mating half sections to a respective one of said flanged ends, said mating half sections and said flanged ends having mutually abutting surfaces, the abutting surfaces of each yoke lying on a second yoke reference plane ($P_c$ or $P_d$, respectively) perpendicular to the first yoke reference plane ($P_a$ or $P_b$, respectively); and

interengagement means (54) extending across said second yoke reference planes for mechanically coupling the thus assembled, and mounted mating half sections to their respective flanged ends, being characterized in that said bores are blind bores (24) and furthermore characterized by interengagement means (44) extending between the respective parallel juxtaposed surfaces and across said first yoke reference planes for opposing relative movement of the thus assembled mating half sections (12a; 12b) in their respective first yoke reference planes ($P_a$; $P_b$) in directions parallel to their respective second yoke reference planes ($P_c$; $P_d$).

2. A universal joint aaccording to Claim 1, characterized in that said interengagement means (44) is arranged symmetrically with respect to the intersection of said first yoke reference planes ($P_a$; $P_b$).

3. A universal joint according to Claim 2, characterized in that said interengagement means (44) is located at the intersection of said first yoke reference planes ($P_a$; $P_b$).

4. A universal joint according to any one of Claims 1 to 3 characterized in that the mounting means (14) extends across the second yoke reference planes ($P_c$; $P_d$) between the mutually abutting surfaces of said mating half sections and said flanged ends.

5. A universal joint according to any one of Claims 1 to 4 characterized by means (48, 50) for detachably interconnecting the mating half sections of each yoke.

6. A universal joint according to Claim 5, characterized in that the interconnecting means (48) extends across said first yoke reference planes and through the interengagement means (44).

7. A universal joint according to any one of Claims 1 to 6 characterized by confronting channels (42) in said parallel juxtaposed surfaces, and spacer elements (46) received in said channels and having oppositely facing surfaces cooperating with the bottoms of said channels to laterally locate said mating yoke half sections with respect to each other.

## Patentansprüche

1. Hochbelastbares Kreuzgelenk als Antriebsverbindung zwischen den jeweils mit einem Flansch versehenen Enden zweier drehbarer Elemente, mit

einem Zapfenkreuz (10), das von zwei rechtwinklig verlaufenden Paaren von koaxial angeordneten Zapfen (11) gebildet wird;

einem Paar von Gelenkgabeln (12, 12'), von denen jede in zwei getrennte komplementäre Gabelhälften (12a, 12b) unterteilt ist, wobei jede Gabelhälfte einen Basisteil mit einem damit einstückigen, nach vorne vorrangenden Lagerteil mit einer darin ausgebildeten Bohrung aufweist;

in den Bohrungen aufgenommenen Lagern (26), wobei die komplementären Gabelhälften jeder Gelenkgabel zum Zusammenbau auf einem Paare der Zapfen ausgebildet sind, wobei jeder Zapfen in einem der Lager drehbar gelagert ist und die Basisteil der derart zusammengebauten komplementären Gabelhälften parallele nebeneinanderliegende Flächen (38) aufweisen, und wobei die nebeneinanderliegenden Flächen jeder Gelenkgabel auf entgegengesetzten Seiten einer ersten, durch den Gelenk-Mittelpunkt verlaufenden Gelenkgabel-Bezugsebene ($P_a$ bzw. $P_b$) im rechten Winkel zueinander verlaufen;

Organen (14, 16) zur lösbaren Befestigung der zusammengebauten komplementären Gabelhälften an jeweils einem mit einem Flansch versehenen Ende, wobei die komplementären Gabelhälften und die mit Flansch versehenen Enden aneinander anliegende Flächen aufweisen, und wobei die aneinander anliegenden Flächen jeder Gelenkgabel auf einer zweiten Bezugsebene ($P_c$ bzw. $P_d$), die im rechten Winkel zur ersten Gelenkgabel-Bezugsebene ($P_a$ bzw. $P_b$) verläuft, liegen;

und Eingrifforganen (54), die über die zweiten Gelenkgabel-Bezugsebenen vorragen zur formschlüssigen Kupplung der derart zusammengebauten und befestigten komplementären Gabelhälften mit den jeweiligen mit Flansch versehenen Enden,

dadurch gekennzeichnet, daß die Bohrungen Blindbohrungen (24) sind, und weiterhin dadurch, daß Eingriffsorgane (44) sich zwischen den jweiligen parallelen nebeneinanderliegenden Flächen und über die ersten Gelenkgabel-Bezugsebenen hinaus erstrecken zur Verhinderung einer Relativebewegung der derart zusammengebauten komplementären Gelenkhälften (12a; 12b) in ihren jeweiligen ersten Gelenkgabel-Bezugsebe-

nen (P$_a$; P$_b$) in Richtungen parallel zu ihren jeweiligen zweiten Gelenkgabel-Bezugsebenen (P$_c$; P$_c$).

2. Kreuzgelenk nach Anspruch 1, dadurch gekennzeichnet, daß die Eingriffsorgane (44) symmetrisch zur Schnittlinie der ersten Gelenkgabel-Bezugsebene (P$_a$; P$_b$) angeordnet sind.

3. Kreuzgelenk nach Anspruch 2, dadurch gekennzeichnet, daß die Eingriffsorgane (44) auf der Schnittlinie der ersten Gelenkgabel-Bezugsebenen (P$_a$; P$_b$) angeordnet sind.

4. Kreuzgelenk nach einem der Ansprüche 1 bis 3, dadurch gekennzeichnet, daß die Befestigungsorgane (14) über die jeweilige zweite Gelenkgabel-Bezugsebene (Pc bzw. P$_c$) zwischen den aneinander anliegenden Flächen der jeweiligen komplementäre Gabelhälften und dem jeweiligen mit Flansch versehenen Ende hinausragen.

5. Kreuzgelenk nach einem der Ansprüche 1 bis 4, dadurch gekennzeichnet, daß Organe (48, 50) zur lösbaren Verbindung der komplementären Gabelhälften jeder Gelenkgabel vorgesehen sind.

6. Kreuzgelenk nach Anspruch 5, dadurch gekennzeichnet, daß jedes Verbindungsorgan (48) sich durch die jeweilige erste Gelenkgabel-Bezugsebene und durch das jeweilige Eingriffsorgan (44) hindurch erstreckt.

7. Kreuzgelenk nach einem der Ansprüche 1 bis 6, gekennzeichnet, durch gegenüberliegende Nuten (42) in den jeweiligen parallelen nebeneinanderliegenden Flächen, und durch in den Nuten aufgenommene Abstandselemente (46) mit in in entgegengesetzte Richtungen gewandten, mit den Böden der Nuten zusammenwirkenden Flächen zur seitlichen Positionierung der komplementären Gabelhälften relativ zueinander.

**Revendications**

1. Joint universel à couple élevé pour réaliser une liaison d'entraînement entre les extrémités à bride de deux élément entraînés en rotation, ledit joint comportant:

un croisillon (10) formé par deux paires, mutuellement perpendiculaires d'axes de croisillon coaxialement alignés (11);

une paire de fourches (12, 12'), chaque fourche étant subdivisée en demi-sections distinctes, associées (12a, 12b) chaque demi-section incluant une portion de base avec un chapeau de palier, débordant en avant, d'une pièce avec la base, dans lequel est formé un alésage;

des paliers (26) contenus dans lesdits alésages, les demi-sections associées de chaque fourche étant adaptées pour assemblage sur une paire desdits axes de croisillon, chaque axe de croisillon étant porté pour pouvoir tourner dans l'un desdits paliers, et les portions de base des demi-sections associées ainsi assemblées présentant des surfaces juxtaposées parallèles (38), les surfaces juxtaposées de chaque fourche étant situées des côtés opposés d'un premier plan de référence (P$_a$ ou P$_b$ respectivement) des fourches passant par le centre du joint, les premiers plans de référence (P$_a$, P$_b$) des fourches étant mutuellement perpendiculaires);

des moyens (14, 16) pour monter de façon amovible les demi-sections associées ainsi assemblés sur l'une respective desdites extrémités à bride, lesdites demi-sections associées et lesdites extrémités à bride présentant des surfaces qui viennent mutuellement s'abouter, les surfaces qui viennent mutuellement s'abouter de chaque fourche se trouvant dans un second plan de référence (P$_c$ ou P$_d$, respectivement) des fourches perpendicular au premier plan de référence (P$_a$ ou P$_b$, respectivement) des fourches; et

des moyens (54) de venir mutuellement en prise passant par lesdits seconds plans de référence des fourches pour coupler mécaniquement les demi-sections associées, ainsi assemblés et montés, avec leurs extrémités respectives à bride,

caractérisé en ce que lesdites alésages sont des alésages borgnes (24) et caractérisé en outre par des moyens (44) de venir mutuellement en prise qui s'étendent entre les surfaces parallèles respectives juxtaposées et de part de d'autre desdits premiers plans de référence des fourches pour s'opposer au mouvement relatif des demi-sections associées (12a; 12b) ainsi assemblés dans leurs premiers plans respectifs (P$_a$, P$_b$) de référence des fourches dans des directions parallèles à leurs seconds plans respectifs (P$_c$; P$_d$) de référence des fourches.

2. Joint universel selon la revendication 1, caractérisé en ce que lesdits moyens (44) de venir mutuellement en prise sont disposés symétriquement par rapport à l'intersection desdits premiers plans (P$_a$; P$_b$) de référence des fourches.

3. Joint universel selon la revendication 2, caractérisé en ce que lesdits moyens (44) de venir mutuellement en prise sont situés à l'intersection desdits premiers plans (P$_a$; P$_b$) de référence des fourches.

4. Joint universel selon l'une quelconque des revendications 1 à 3, caractérisé en ce que les moyens de montage (14) s'étendent de part et d'autre des seconds plans (P$_c$; P$_d$) de référence des fourches, entre les surfaces, qui viennent mutuellement s'abouter, desdites demisections associées et desdites extrémités à bride.

5. Joint universel selon l'une quelconque des revendications 1 à 4, caractérisé par des moyens (48, 50) pour interconnecter les demi-sections associées de chaque fourche.

6. Joint uviversal selon la revendication 5, caractérisé en ce que les moyens d'interconnexion (48) s'étendent de part et d'autre desdits premiers plans de référence des fourches et à travers les moyens (44) de venir mutuellement en prise.

7. Joint universel selon l'une quelconque des revendications 1 à 6, caractérisé par des rainures (42) se faisant face, dans lesdits surfaces parallèles juxtaposées, et par des éléments écarteurs (46) logés dans lesdites rainures et présentant des surfaces se faisant face et collaborant avec les fonds desdites rainures pour positionner latéralement lesdites demi-sections associées des fourches l'une par rapport à l'autre.

Fig. 1

Fig. 2

Fig. 3

Fig. 4

Fig. 5